# FASCICULE DE BREVET EUROPEEN

(11) **EP 1 130 732 B1**
(45) Date de publication et mention de la délivrance du brevet: **16.09.2009**
(21) Numéro de dépôt: 01400525.0
(22) Date de dépôt: 18.02.2001
(51) Int. Cl.: H02H 3/087, H02H 3/24

(54) **Disjoncteur à détection de sous-tension**
Schalter mit Unterspannungserfassung
Circuit breaker with undervoltage detection

(30) Priorité: 29.02.2000 FR 0002552
(43) Date de publication de la demande: 05.09.2001
(73) Titulaire: SAGEM COMMUNICATIONS, 92848 Rueil Malmaison Cedex (FR)
(72) Inventeur: Bara, Cédric, 95150 Taverny (FR); Donnenwirth, Freddy, 78600 Maisons Laffitte (FR)
(74) Mandataire: Bloch, Gérard

(56) Documents cités:
- DE-A- 3 421 520
- US-A- 5 642 251

## Description

Une source d'alimentation de circuits électriques alimente en général ceux-ci à travers un circuit de protection contre les court-circuits. On évite ainsi les risques de destruction de l'alimentation et des circuits. Un fusible ne convient pas toujours à cet effet car, outre un temps de réaction non négligeable, il est mal adapté aux environnements difficiles, tels que pollution et vibrations, et risque donc de présenter un mauvais contact ou même de se briser.

On préfère donc utiliser à la place un disjoncteur, qui comporte un interrupteur électronique ou électromécanique commandé par un détecteur de sur-courant.

Un tel disjoncteur est connu dans le document DE-A-3 421 520.

Le problème à l'origine de l'invention va au-delà de la simple protection contre les court-circuits. Il faut assurer aussi une bonne sûreté de fonctionnement des circuits électriques et électroniques alimentés, servant à la signalisation et la commande dans le domaine ferroviaire. Il s'agissait donc de détecter toute dérive excessive de leurs conditions de fonctionnement et de les inhiber en pareil cas.

Les circuits électroniques, en particulier, doivent en effet fonctionner sous une tension relativement précise. Si leur tension d'alimentation tombe en-dessous d'un seuil garanti de bon fonctionnement, ils risquent cependant de continuer à fonctionner mais ils engendrent des erreurs, dont les conséquences peuvent être graves dans le domaine des transports ferroviaires ici considéré. Il faut donc pouvoir détecter une telle situation, pour inhiber les circuits.

Cette situation de sous-tension se présente lorsque l'alimentation dérive et ne fournit plus toute la tension nécessaire, ou encore parce que les fils d'alimentation n'ont pas une section suffisante. Cette situation n'est pas facilement détectable puisque le disjoncteur y est insensible.

L'invention vise à résoudre cette difficulté.

A cet effet, l'invention concerne un disjoncteur pour relier une source d'alimentation en courant continu, de tension prédéterminée, à des circuits à alimenter, disjoncteur comprenant un bloc de détection de franchissement d'un seuil haut de courant agencé pour commander des moyens de contrôle du courant débité et un bloc de détection de sous-tension agencé pour commander les moyens de contrôle du courant, disjoncteur caractérisé par le fait que l'un des blocs commande indirectement les moyens de contrôle de courant à travers l'autre bloc.

Ainsi, outre la surveillance de la consommation des circuits utilisateurs en aval et le fait que le disjoncteur surveille l'alimentation amont pour détecter une baisse excessive de tension, susceptible de perturber les circuits utilisateurs, les commandes sont ainsi simplifiées, un défaut d'un type, courant ou tension, provoquant une signalisation de défaut de l'autre type.

Avantageusement, le bloc de détection de sous-tension comporte une diode zener polarisée à partir de la tension d'alimentation de façon à ne fournir un courant de commande, de maintien des moyens de contrôle à l'état passant, que lorsque la tension d'alimentation dépasse un seuil bas prédéterminé.

La détection de sous-tension est ainsi très simplement réalisée et un défaut de sur-courant produit le même effet qu'un défaut de sous-tension.

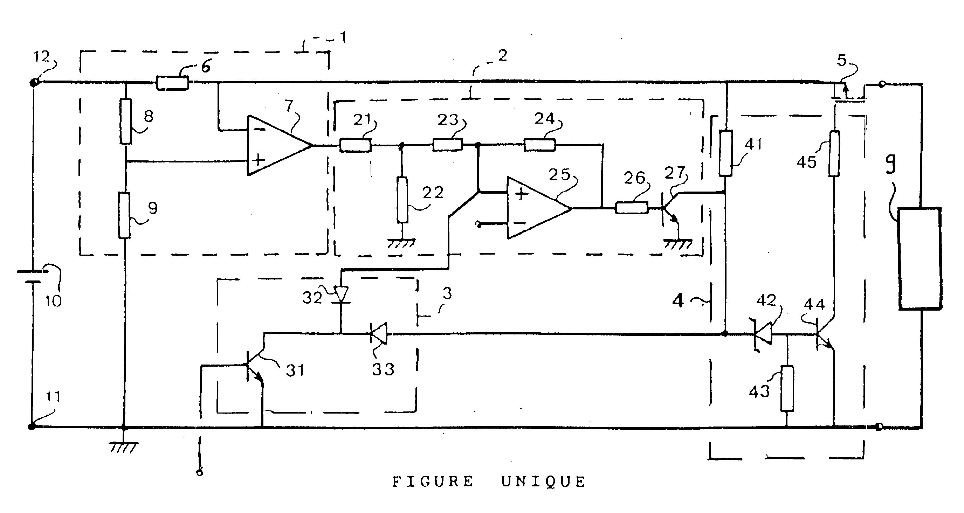

L'invention sera mieux comprise à l'aide de la description suivante d'une forme préférée de réalisation du disjoncteur de l'invention, en référence à la figure unique qui en est un schéma électrique.

Le disjoncteur représenté relie une source 10 de courant à tension continue prédéterminée, ici +12 volts, à des circuits 9 alimentés par la source 10. Le disjoncteur comporte un bloc 1 de détection de sur-courant et un bloc 4 de détection de sous-tension, qui commandent un circuit 5 de contrôle du courant débité par la source 10. Il est en outre prévu, dans cet exemple, des circuits 2 de mémorisation de la sortie du bloc 1, pour maintenir le circuit de contrôle 5 à l'état ouvert après une commande d'ouverture provenant du bloc 1. Il est aussi prévu des circuits 3 de réarmemement du disjoncteur.

Le bloc 1 comporte une résistance 6 de shunt de mesure de courant, valant ici 51 m ohms , reliant une borne 12, d'alimentation positive +12 V de la source 10, à l'électrode de source d'un transistor MOS canal P constituant ici un interrupteur 5 de contrôle du courant de la source 10.

La résistance 6 est reliée, côté opposé à la borne 12, à l'entrée inverseuse d'un amplificateur opérationnel 7 dont l'entrée non inverseuse est polarisée par un pont diviseur de résistances 8, 9 reliant la borne 12 à une borne 11 de masse de la batterie 10.

L'amplificateur 7 est d'un type dont les tensions d'entrées peuvent, sans risque, atteindre la tension d'alimentation haute ou basse (la masse).

Le pont diviseur 8, 9 est réglé pour que la chute de tension dans la résistance 8 reliée à la borne 12 soit égale à la chute de tension (51 mV) dans la résistance de shunt 6 lorsque cette dernière est traversée par le courant maximal admissible, ici 1 ampère. Des capacités de filtrage du bruit n'ont pas été représentées.

Les circuits de mémorisation 2 comportent, en tête, un pont diviseur 21, 22 basse impédance (1 k ohm , 2,2 k ohms), reliant à la masse la sortie de l'amplificateur 7, pont dont le point milieu est relié, par une résistance 23 de forte valeur (220 k ohms), à l'entrée non inverseuse d'un amplificateur opérationnel 25 à sortie rebouclée sur cette entrée à travers une résistance 24 de forte valeur (330 k ohms). L'entrée inverseuse de l'amplificateur 25 est polarisée à un seuil fixe de 2 volts, par des circuits non représentés. La résistance 24 (330 k ohms), d'une part, et la résistance 23 (220 k ohms) en série avec les résistances 21 et 22 considérées pour le calcul comme étant en parallèle (environ 0,7 k ohm), d'autre part, constituent un pont diviseur de valeur 0,4 environ de rétroaction positive de la sortie de l'amplificateur 25 sur son entrée non inverseuse, qui permet d'obtenir un effet mémoire (déclencheur, ou trigger, de Schmitt) lorsque la sortie de l'amplificateur 7 retombe au repos à sensiblement 0 volt. La sortie de l'amplificateur à mémoire 25 commande, à travers une résistance de protection 26, la base d'un transistor NPN référencé 27 dont l'émetteur est à la masse.

Le bloc 4 de détection de sous-tension comporte une diode zener 42, ici de valeur zener 9,1 V, polarisée en zener pour alimenter sous quelques mA la base d'un transistor NPN référencé 44 dont l'émetteur est à la masse. Une résistance 41 (1,5 k ohm) alimente la cathode de la zener 42 depuis la borne 12, ici à travers la résistance 6. Une résistance 43 (680 ohms) est branchée en parallèle sur la diode base-émetteur du transistor 44 pour dériver environ 1 mA afin de protéger contre le bruit. Le collecteur du transistor 44 commande, à travers une résistance 45, l'électrode de grille du MOS 5.

Précisément, la MOS 5 est à l'état passant lorsque le transistor 44, alimenté par la zener 42, est conducteur et polarise donc négativement la grille par rapport à l'électrode de source, qui est à la tension d'alimentation +12V.

Les circuits de réarmement 3 sont ici constitués d'un transistor NPN référencé 31 à émetteur à la masse, dont la base est accessible extérieurement et reliée à une liaison, non représentée, de téléouverture et téléréarmement. Pour la simplicité de l'exposé, les circuits de protection de la base ne sont pas représentés. Le collecteur du transistor 31 est relié aux cathodes des deux diodes 32, 33 de séparation de commandes, dont les anodes sont respectivement reliées à l'entrée de commande, non inverseuse, de l'amplificateur à mémoire 25 et à la cathode de la zener 42. Le collecteur du transistor 27 commandé par l'amplificateur à mémoire 25 est de même relié à la cathode de la zener 42.

Les transistors 27 et 31 peuvent donc, indépendamment l'un de l'autre, dériver à la masse le courant de la résistance 41 destiné à la zener 42 et ainsi ouvrir le MOS 5 par blocage de son transistor de commande 44.

On conçoit que, en variante, le transistor 44 pourrait de même être privé de courant base par des transistors à faible tension de saturation, MOS par exemple, court-circuitant sa jonction base émetteur.

Le fonctionnement du disjoncteur va maintenant être expliqué.

En fonctionnement normal, à courant débité inférieur à 1 A et à tension supérieure au seuil bas d'environ 11 volts, l'amplificateur 7 fournit une tension de repos sensiblement nulle et l'amplificateur à mémoire 25 bloque le transistor 27. Pour la simplicité, on n'a pas représenté un circuit de mise sous tension, à résistance et condensateur intégrateur de la tension d'alimentation, qui force temporairement l'amplificateur à mémoire 25 dans son état repos, par exemple par action sur l'entrée de réarmement (base du transistor 31). Dans le bloc 4, la résistance 41 alimente en courant le transistor 44 et le MOS 5 est donc conducteur.

Si le courant débité dépasse le seuil de lA, la sortie de l'amplificateur 7 passe à une valeur haute voisine des 12 volts d'alimentation. Le pont diviseur basse impédance 21, 22 fournit une tension d'environ 0,7 fois cette valeur haute au pont diviseur haute impédance 23, 24, de valeur de division 0,6 dans ce sens. L'entrée non inverseuse de l'amplificateur 25 reçoit donc une valeur d'environ 0,42 fois la tension +12 volts, ce qui dépasse donc les 2 volts de seuil de l'entrée inverseuse. La résistance 24 fournit une rétroaction confirmant l'état haut de l'entrée non inverseuse.

Le MOS 5 passe donc alors à l'état bloqué, suite à la conduction du transistor 27, et l'excès de courant débité, qui a été détecté par l'amplificateur 7, disparaît, ce qui provoque la retombée à 0 volt de la sortie de ce dernier.

Comme cependant le pont diviseur 23, 24 (les résistances 21 et 22 sont de valeurs relatives négligeables) présente un facteur voisin de 0,4 en rétroaction, la tension de l'entrée non inverseuse reste supérieure au seuil de 2 volts et le MOS 5 reste donc à l'état ouvert.

En ce qui concerne la détection d'une sous-tension, la zener 42 avec la diode de jonction base-émetteur du transistor 44 représentent une tension de contre-polarisation d'environ 9,5 V. Sachant que la résistance de shunt 43 détourne presque 1 mA, il faut donc qu'il reste au moins 1,5 V aux bornes de la résistance 41 (1,5 k ohm) pour fournir un minimum de courant base au transistor 44. Le seuil de détection de sous-tension est donc d'environ 9,5 + 1,5 = 11 volts et varie légèrement avec la dispersion des tensions de contre-polarisation présentées par les composants et avec le gain en courant du transistor 44.

Pour le réarmemement, une impulsion positive est appliquée sur la base du transistor 31, qui tire alors à la masse les diodes 32 et 33 et force donc à zéro, de façon prioritaire, l'entrée non inverseuse de l'amplificateur à mémoire 25.

A la disparition de l'impulsion, l'amplificateur 7 peut à nouveau commander cet amplificateur 25 et donc le MOS 5.

Afin toutefois d'éviter de faire passer le MOS 5 à l'état conducteur et de le maintenir dans cet état pendant toute la durée de l'impulsion de réarmemement, alors qu'un courant excessif est éventuellement présent, la diode 33 se substitue au transistor 27 (quel que soit l'état de ce dernier) pour commander la mise à l'état bloqué du MOS 5.

On peut en outre, pour l'exploitation de l'alimentation 10 et des circuits 9, prévoir de maintenir ouvert le disjoncteur, en maintenant l'impulsion au niveau haut d'activation de la chaîne 3 d'ouverture-réarmement puisque, grâce à la diode 33, le réarmement n'intervient qu'à la disparition de l'impulsion de télécommande.

## Revendications

1. Disjoncteur pour relier une source d'alimentation en courant continu, de tension prédéterminée, à des circuits à alimenter, disjoncteur comprenant un bloc (1) de détection de franchissement d'un seuil haut de courant agencé pour commander des moyens (5) de contrôle du courant débité et un bloc (4) de détection de sous-tension agencé pour commander les moyens (5) de contrôle du courant, disjoncteur **caractérisé par le fait que** l'un des blocs (1, 4) commande indirectement les moyens (5) de contrôle de courant à travers l'autre bloc (4, 1).

2. Disjoncteur selon la revendication 1, dans lequel c'est le bloc (4) de détection de sous-tension qui commande directement les moyens de contrôle (5).

3. Disjoncteur selon l'une des revendications 1 et 2, dans lequel le bloc (4) de détection de sous-tension comporte une diode zener (42) polarisée à partir de la tension d'alimentation de façon à ne fournir un courant de commande, de maintien des moyens de contrôle (5) à l'état passant, que lorsque la tension d'alimentation dépasse un seuil bas prédéterminé.

4. Disjoncteur selon l'une des revendications 2 et 3, dans lequel le bloc (1) de détection de courant est agencé pour court-circuiter la diode zener (42) en cas de courant excessif.

5. Disjoncteur selon l'une des revendications 1 à 4, dans lequel il est prévu un étage de commande (2, 3) comportant des moyens (23, 24, 25) de mémorisation de la sortie du bloc de détection de courant (1).

6. Disjoncteur selon la revendication 5, dans lequel le bloc de commande (2, 3) comporte une chaîne de réarmement (31-33), à commande externe, agencée pour effacer le contenu des moyens de mémorisation (23-25).

7. Disjoncteur selon la revendication 6, dans lequel la chaîne de réarmement (31-33) est agencée pour simuler un défaut de sur-courant et se substituer aux moyens mémoires (23-25) pour forcer les moyens de contrôle (5) à l'état ouvert pendant la durée du réarmement.

## Claims

1. Circuit breaker for connecting a D.C. power supply, of a predetermined voltage, to circuits to be powered, which circuit breaker includes a high current threshold exceeding detection block (1) arranged for controlling means (5) for controlling the current provided and an undervoltage detection block (4) arranged for controlling the means (5) for controlling the current, which circuit breaker is **characterized in that** one of the blocks (1, 4) indirectly controls the means (5) for controlling the current through the other block (4, 1).

2. Circuit breaker according to claim 1, wherein the undervoltage detection block (4) is the one which directly controls the control means (5).

3. Circuit breaker according to any of claims 1 or 2, wherein the undervoltage detection block (4) includes a zener diode (42) biased from a supply voltage so as to provide a control current, for maintaining the control means (5) to the ON state, only when the supply voltage exceeds a predetermined low threshold.

4. Circuit breaker according to any of claims 2 or 3, wherein the current detection block (1) is arranged to short-circuit the zener diode (42) in the case of an excess current.

5. Circuit breaker according to any of claims 1 to 4, wherein a control stage (2, 3) is provided, including means (23, 24, 25) for storing the output of the current detection block (1).

6. Circuit breaker according to claim 5, wherein the control block (2, 3) includes a reset string (31 à 33), which is externally controlled, arranged to delete the contents of the storing means (23 à 25).

7. Circuit breaker according to claim 6, wherein the reset string (31 à 33) is arranged to simulate an overcurrent fault and to substitute for the storing means (23 à 25) to force the control unit (5) to the OFF state during the reset period of time.

## Patentansprüche

1. Leistungsschalter zum Verbinden einer Gleichstrom-Versorgungsquelle vorherbestimmter Spannung mit zu versorgenden Schaltungen, wobei der Leistungsschalter einen Block (1) zur Erfassung des Überschreitens einer oberen Stromschwelle, der angeordnet ist, um Mittel (5) zur Kontrolle des abgegebenen Stroms zu steuern, und einen Block (4) zur Erfassung einer Unterspannung, der angeordnet ist, um die Mittel (5) zur Stromkontrolle zu steuern, umfasst, wobei der Leistungsschalter **dadurch gekennzeichnet ist, dass** einer der Blöcke (1, 4) die Mittel (5) zur Stromkontrolle über den anderen Block (4, 1) indirekt steuert.

2. Leistungsschalter nach Anspruch 1, wobei es der Block (4) zur Erfassung einer Unterspannung ist, der die Kontrollmittel (5) direkt steuert.

3. Leistungsschalter nach einem der Ansprüche 1 und 2, wobei der Block (4) zur Erfassung einer Unterspannung eine ZenerDiode (42) umfasst, die von der Versorgungsspannung ausgehend polarisiert ist, um einen Steuerstrom zum Erhalten der Kontrollmittel (5) im Durchlasszustand nur zu liefern, wenn die Versorgungsspannung eine vorherbestimmte untere Schwelle überschreitet.

4. Leistungsschalter nach einem der Ansprüche 2 und 3, wobei der Block (1) zur Stromerfassung angeordnet ist, um die ZenerDiode (42) im Falle eines Überstroms kurzzuschließen.

5. Leistungsschalter nach einem der Ansprüche 1 bis 4, wobei eine Steuerstufe (2, 3) bereitgestellt wird, die Mittel (23, 24, 25) zum Speichern der Ausgabe des Stromerfassungsblocks (1) umfasst.

6. Leistungsschalter nach Anspruch 5, wobei der Steuerblock (2, 3) eine Wiedereinschaltkette (31 bis 33) mit externer Steuerung umfasst, die angeordnet ist, um den Inhalt der Speichermittel (23 bis 25) zu löschen.

7. Leistungsschalter nach Anspruch 6, wobei die Wiedereinschaltkette (31 bis 33) angeordnet ist, um einen Überstromfehler zu simulieren und die Speichermittel (23 bis 25) zu ersetzen, um die Kontrollmittel (5) während der Wiedereinschaltdauer in den offenen Zustand zu zwingen.
